# EUROPEAN PATENT APPLICATION

(11) **EP 2 079 235 A2**
(43) Date of publication of application: **15.07.2009**
(21) Application number: 08009006.1
(22) Date of filing: 15.05.2008
(51) Int. Cl.: H04N 5/64, A47B 81/06

(54) **Retractable television interface module**

(30) Priority: 14.01.2008 CN 200810065196
(71) Applicant: Shenzhen TCL New Technology Ltd., Nanshan District Shenzhen Guangdong 518067 (CN)
(72) Inventor: Wang, Yufeng, Nanshan District Shenzhen Guangdong 518067 (CN); Wang, Daiging, Nanshan District Shenzhen Guangdong 518067 (CN); Chen, Chiping, Nanshan District Shenzhen Guangdong 518067 (CN); Liu, Yadong, Nanshan District Shenzhen Guangdong 518067 (CN); Fu, Guofeng, Nanshan District Shenzhen Guangdong 518067 (CN)
(74) Representative: MERH-IP Matias Erny Reichl Hoffmann

(57) **Abstract**

The invention provides a retractable television interface module. The interface plate is arranged in the front of the cabinet, the retractable module including a fixed seat and a movable seat which can slide along vertically to the fixed seat, the said fixed seat being connected to the cabinet, the said movable seat being connected to the fixed seat by connection arms, and having an interface plate mounted on the base. The cabinet has a hatch on the underside to enable the movable seat to slide in; by putting the retractable module in the front of the cabinet, the retractable module with the fixed seat and movable seat linked through the connection arms, rollers are arranged between the fixed seat and the movable seat to permit the movable seat to slide up and down along the fixed seat. The movable seat moves down when in use, and moves gently upwards to make it hide in the cabinet when not in use. The retractable interface module is convenient to use, dust-proof, and water-proof.

## Description

### Field of the Invention

The present invention relates to the field of television, more specifically, to the pre-interface movable device of television.

### BACKGROUND OF THE INVENTION

At present, the flat panel televisions have been made bigger and bigger, and the flat panel TV is developing toward the digitized direction. So the use of the various terminals, wiring accesses ( such as USB terminal, VGA terminal etc.) on the televisions are more frequently too. However, most of the terminals are arranged on the back of the television, it is troublesome to use. And if transfer the interface from the back to the front only, but don't pay attention to the practicability and the security, it is also a fly in the ointment. So here needs ameliorate in the both aspects. In order to satisfy the need of convenient access and the effect of perfection and utility, it asks to arrange the interface in front of the flat panel TV and don't affect the whole appearance.

### SUMMARY OF THE INVENTION

The present invention seeks to provide a pre-interface movable device of television to settle discommodious and unpractical problems when use the interface of televisions in existing technique.

In order to realize the present invention, provides a pre-interface movable device of television, including the cabinetry and the interface plate, the interface of the interface plate is arranged in the front of the cabinetry, wherein the said movable device includes a fixed seat and a movable seat which can slide along vertical to the fixed seat, the said fixed seat is connected to cabinetry, the said movable seat is connected to fixed seat by the connection arms, the said movable seat having an interface plate mounted on the base, the said cabinetry having a hatch on the underside to enable movable seat to slide in.

More specifically, the said movable seat further includes a bottom lid, the bottom lid is mounted on the base of the movable seat, the said interface plate is mounted on the upside of the bottom lid.

More specifically, there are two connection arms mounted on the fixed seat and movable seat respectively.

More specifically, the said connection arms further include the connection arm body and the fixed bolts, the body fastened respectively on the fixed seat and movable seat by the fixed bolts.

More specifically, wherein each of the said connection arm body includes a front arm, a lateral recess hole is arranged on the front arm which is fastened on the movable seat, a spring is mounted between the another front arm which is fastened on the fixed seat and the said lateral recess hole, the front arm extended into the said lateral recess hole.

More specifically, wherein the connection arm body having through-holes on them, the said fixed seat and movable seat both have been mounted fixed posts, the connection arms are fastened on the fixed seat and the movable seat through the fixed posts and the through-holes.

More specifically, wherein a guide concave groove is mounted on the said fixed seat, a slidable convex groove matched with the guide concave groove is mounted on the said movable seat.

More specifically, wherein the rollers are arranged between the fixed seat and the movable seat to permit the movable seat sliding up and down along the fixed seat.

More specifically, wherein the said fixed seat further mounted a press strip, the press strip is a "L" type cube, the said rollers are mounted on the one flange of the press strip.

More specifically, wherein the said movable seat is a "L" type cube, it is linked at its one end with the fixed seat, and combined together with the bottom lid at the another end.

### BRIEF DESCRIPTION OF THE DRAWINGS

FIG. 1 is an exploded perspective view of the present invention;
FIG. 2 is an assemble schematic diagram of the present invention;
FIG. 3 is a schematic diagram of the interface plate in the present invention;
FIG. 4 is a schematic diagram of the bottom lid;
FIG. 5 is a schematic diagram of the movable seat when it sliding down;
FIG. 6 is a back view of the movable seat in the present invention;
FIG. 7 is an exploded perspective view of the connection arm in the present invention;
FIG. 8 is a perspective view of the present invention installing in the TV cabinetry when it is not pulled down;
FIG. 9 is a perspective view of the present invention when it is pulled down.

### DETAILED DESCRIPTION OF THE PREFERRED EMBODIMENTS

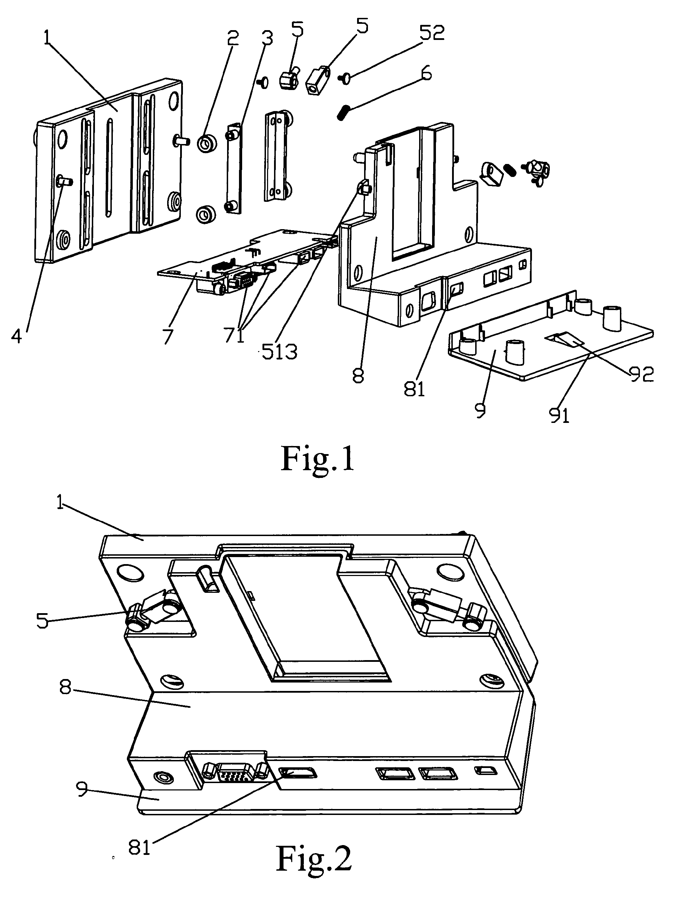

As illustrated in FIG. 1 and FIG. 2, The present invention provide a pre-interface movable device of television, including the cabinetry ( not shown) and the interface plate 7, the interface 71 of the interface plate 7 is arranged in the front of the cabinetry, the said movable device includes a fixed seat 1 and a movable seat 8 which can slide along vertical to the fixed seat 1, the said fixed seat 1 is connected to cabinetry, the said movable seat 8 is connected to fixed seat 1by the connection arms 5, the rollers 2 are arranged between the fixed seat 1 and the movable seat 8 to permit the movable seat 8 sliding up and down along the fixed seat 1, the said cabinetry having a hatch on the underside to enable movable seat 8 to slide in, the said movable seat 8 having a perforation 81 on the base, the interface 71 of the interface plate 7 stretches outside the perforation 81. The said fixed seat 1 of the present invention is fastened on the cabinetry, movable seat 8 connected with fixed seat 1, a roller 2 is arranged between them and make them sliding relatively, there is a hatch on the underside of the cabinetry of the flat TV, the width of the hatch should capable of receiving the movable seat 8 moving up and down freely, if pull the movable seat 8 gently, it can make movable seat 8 shifting down and exposing the interface 71 for using, push the movable seat 8 upward to make it hides in the cabinetry when not use, so it can prevent the interfaces of television from mangling by dust, water spots and so on, it will have no blight to the vision of audience because the interface 71 can not be seen, at the same time, it is also very convenient for consumer to use in the condition of put the interface in the front of the cabinetry.

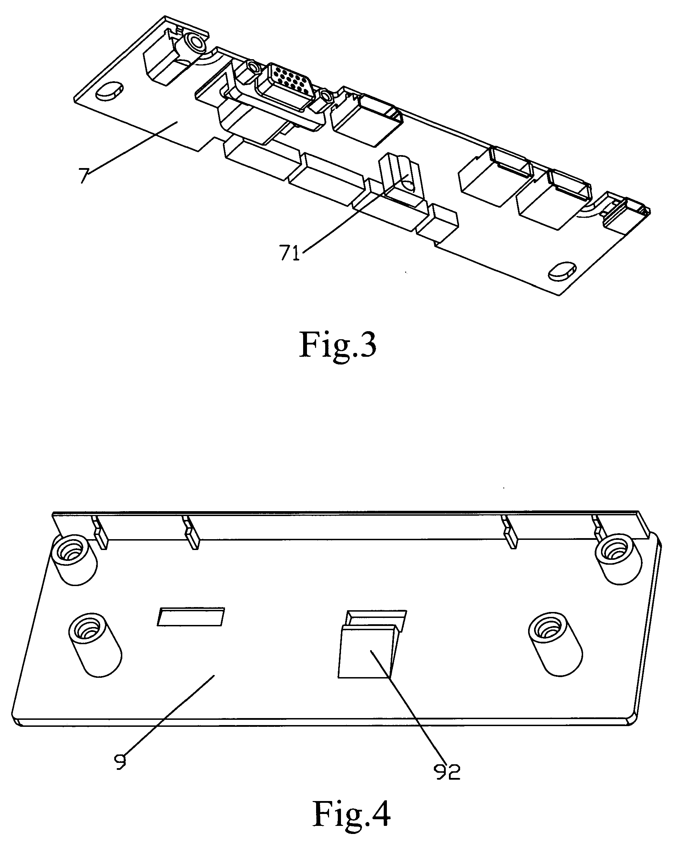

As illustrated in FIG. 2 to FIG.4, the movable device of the present invention further includes a bottom lid 9, the bottom lid 9 is mounted on the base of the movable seat 8, the said bottom lid 9 also includes a side 91 lies on the frontispiece. The said bottom lid 9 is made of transparent plastic mounted under the movable seat 8 through the bolt, the outer side 91 of the bottom lid 9 is toward outside when is arranged, that is, the direction of the screen of the television, having the function as a lens, and the emission code of the remote controller 92 refracted transmits through the outer side 91 of the bottom lid 9 to the infrared receiving head 71 under the interface plate 7.

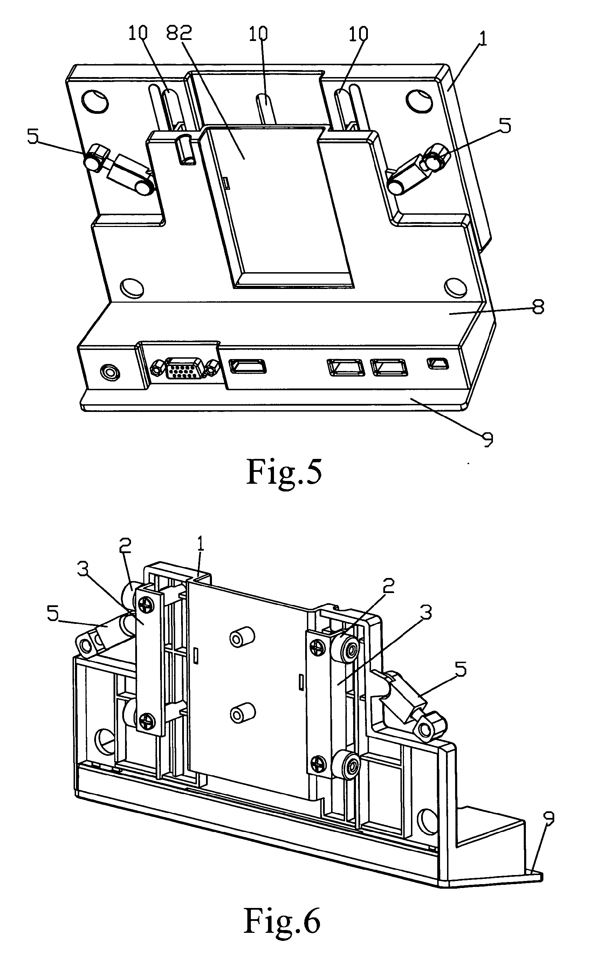

As illustrated in FIG.5, a guide concave groove 10 is mounted on the said fixed seat 1, a slidable convex groove 82 matched with the guide groove 10 is mounted on the said movable seat 8. The said fixed seat 1 of the present invention is a cube with screw on it, and is fastened on the back shell of television through bolt, the guide concave groove 10 is in the middle, the movable seat 8 can slide up and down along the groove freely, a slidable convex groove 82 is mounted on the movable seat 8; the present invention can be either guide concave groove on the fixed seat 1 matched with slidable convex groove on the movable seat 8 or guide convex groove on the fixed seat 1 matched with slidable concave groove on the movable seat 8. The present invention arrange guide concave groove 10 and slidable convex groove 82 to allow the movable seat 8 and the fixed seat 1 sliding relatively more convenient, and creates no attrition.

As illustrated in FIG. 1 and FIG. 6, the said fixed seat 1 of the present invention further mounted a press strip 3, the press strip 3 is a "L" type cube, the said rollers 2 are mounted on the one flange of the press strip 3. The said press strip 3 of the present invention is fastened on the movable seat 8 through bolt; the said rollers 2 are cylinders capable rolling on the fixed seat 1, there are four rollers 2 installed on the press strip 3 through bolts, forming a whole with the movable seat 8 and the press strip 3.

As illustrated in FIG. 2, the said movable seat 8 of the present invention is a "L" type cube, it is linked at its one end with the fixed seat 1, and combined together with the bottom lid 9 at the another end.

As illustrated in FIG. 1 and FIG. 2 and FIG. 5 to FIG.7, there are two connection arms 5 mounted on the fixed seat 1 and movable seat 8 respectively; the said connection arms 5 further include the connection arm body 51 and the fixed bolts 52, the body 51 fastened respectively on the fixed seat 1 and movable seat 8 by the fixed bolts 52;each of the said connection arm body 51 includes a front arm 511, a lateral recess hole 512 is arranged on the front arm 511 which is fastened on the movable seat 8, the another front arm 511 fastened on the fixed seat 1 extended into the said lateral recess hole 512, put a spring 6 in the hole 512, the front end of the front arm 511 hold the end of the spring 6, thus will compress the spring 6 and create elasticity. The said connection arm body 51 having through-holes 513 on them, the said fixed seat 1 and movable seat 8 both have been mounted fixed posts 4, as illustrated in FIG. 1, the connection arms 5 are fastened on the fixed seat 1 and the movable seat 8 through the fixed posts 4 and the through-holes 513.

As illustrated in FIG.1 to FIG.3, the number of the said interfaces 71 on the interface plate 7 is six, one earphone interface, one HDMI interface , one VGA interface and three USB interfaces, the interface holes 81 are arranged correspondingly with each interfaces 71 in the front of the foundation of the said movable seat 8, these six interfaces extended from the interface holes 81 of the movable seat 8. The interfaces can be arranged by the need of users, for instance, arrange four or eight interfaces.

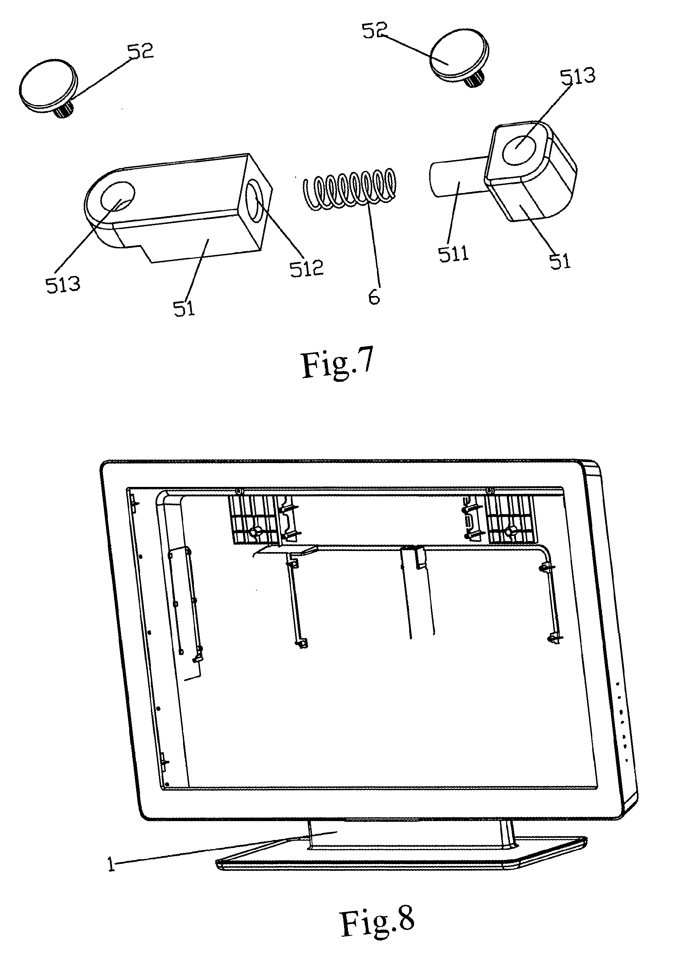

As illustrated in FIG. 2 and FIG.8, when the movable seat 8 is not pulled down, its top levels with the fixed seat 1, at this time the direction of the two connection arms 5 are inward inclined upward, under the elasticity of the spring 6, the two connection arms can not slid relatively, specifically, the spring 6 locating left and right push the movable seat 8 along the direction of the connection arms inward inclined upward, only need design the appropriate pushing angle and the elasticity of the spring 6 in advance, the movable seat 8 will not slide. As illustrated in FIG.8, the pre-interface movable device of television is hided in the bottom of the television.

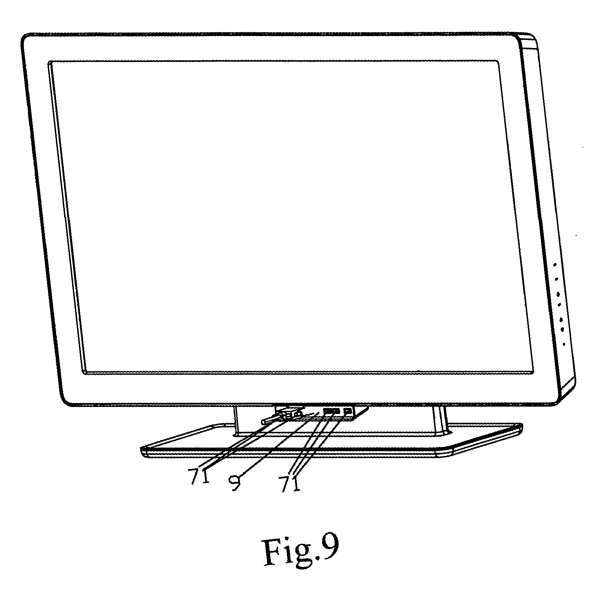

As illustrated in FIG. 5, when the bottom lid 9 is pulled down, the movable seat 8 sliding down along the guide concave groove 10 of the fixed seat 1, the two connection arms 5 sliding relatively here, and get close with each other, the spring 6 is compressed, so some strength will be need to hurdle the elasticity and allow the bottom lid 9 moving down, when the bottom lid 9 is pulled above half, the direction of the two connection arms 5 are inward inclined downward, under the elasticity at this time, the two connection arms 5 are separated relatively, the bottom lid 9 can move up and down under the elasticity till get the base. FIG. 5 is a schematic diagram after pulling down the bottom lid 9. FIG. 9 is a perspective view of the present invention installing the pull-down bottom lid.

The potential limited pull-down distance of the movable seat 8 can be confined by the relative motion distance of the slidable convex groove 82 and the guide concave groove 10, or by the movable region of the roller 2; the limited pull-down distance of the movable seat 8 no need to contact with the base plate, thus the movable seat can be pulled down in half and then insert various terminal interface wirings. Unfix the wirings when the use is finished and push the bottom lid 9 upward, the two connection arms 5 sliding relatively here and compress the spring 6, so some strength will be need to hurdle the elasticity, when the direction of the two connection arms 5 are inward inclined upward, the elasticity will make the two connection arms 5 separated relatively, and push the movable seat 8 moves upward till get the top, reverts to its primary position.

## Claims

1. A pre-interface movable device of television, including a cabinetry and an interface plate, the interface of the interface plate is arranged in the front of the cabinetry, wherein the said movable device includes a fixed seat and a movable seat which can slide along vertical to the fixed seat, the said fixed seat is connected to cabinetry, the said movable seat is connected to fixed seat by the connection arms, the said movable seat having an interface plate mounted on the base, the said cabinetry having a hatch on the underside to enable movable seat to slide in.

2. The device of claim 1, wherein the said movable seat further includes a bottom lid, the bottom lid is mounted on the base of the movable seat, the said interface plate is mounted on the upside of the bottom lid.

3. The device of claim 1 or claim 2, wherein there are two connection arms mounted on the fixed seat and movable seat respectively.

4. The device of claim 3, wherein the said connection arms further include the connection arm body and the fixed bolts, the body fastened respectively on the fixed seat and movable seat by the fixed bolts.

5. The device of claim 4, wherein each of the said connection arm body includes a front arm, a lateral recess hole is arranged on the front arm which is fastened on the movable seat, a spring is mounted between the another front arm which is fastened on the fixed seat and the said lateral recess hole, the front arm extended into the said lateral recess hole.

6. The device of claim 5, wherein the connection arm body having through-holes on them, the said fixed seat and movable seat both have been mounted fixed posts, the connection arms are fastened on the fixed seat and the movable seat through the fixed posts and the through-holes.

7. The device of claim 1 or claim 2, wherein a guide concave groove is mounted on the said fixed seat, a slidable convex groove matched with the guide concave groove is mounted on the said movable seat.

8. The device of claim 7, wherein the rollers are arranged between the fixed seat and the movable seat to permit the movable seat sliding up and down along the fixed seat.

9. The device of claim 8, wherein the said fixed seat further mounted a press strip, the press strip is a "L" type cube, the said rollers are mounted on the one flange of the press strip.

10. The device of claim 9, wherein the said movable seat is a "L" type cube, it is linked at its one end with the fixed seat, and combined together with the bottom lid at the another end.
